# EUROPÄISCHE PATENTSCHRIFT

(11) **EP 3 818 794 B1**
(45) Veröffentlichungstag und Bekanntmachung des Hinweises auf die Patenterteilung: **24.01.2024**
(21) Anmeldenummer: 20205821.0
(22) Anmeldetag: 05.11.2020
(51) Int. Cl.: A01B 33/02, A01B 33/08, A01B 61/00, A01B 73/04

(54) **MASCHINE MIT MINDESTENS ZWEI SEITLICH EINES FAHRZEUGES ANGEORDNETEN ARBEITSEINHEITEN**
MACHINE WITH AT LEAST TWO WORKING UNITS ARRANGED TO THE SIDE OF A VEHICLE
MACHINE POURVUE D'AU MOINS DEUX UNITÉS DE TRAVAIL AGENCÉES LATÉRALEMENT SUR UN VÉHICULE

(30) Priorität: 08.11.2019 IT 201900020614
(43) Veröffentlichungstag der Anmeldung: 12.05.2021
(73) Patentinhaber: Seppi M. spa-AG, 38017 Mezzolombardo (IT)
(72) Erfinder: SEPPI, Lorenz, 39052 Caldaro (IT)
(74) Vertreter: Ausserer, Anton

(56) Entgegenhaltungen:
- DE-A1- 4 322 263
- FR-A1- 2 886 095
- GB-A- 2 346 790
- GB-A- 2 353 931
- NL-A- 7 604 451

## Beschreibung

Die vorliegende Erfindung bezieht sich auf eine Maschine mit mindestens zwei seitlich eines Fahrzeuges angeordneten Arbeitseinheiten, ins besonders eine durch ein Fahrzeug zum Beispiel einen Traktor bewegte, gezogene oder geschobene Maschine, mit mindestens zwei seitlich eines Fahrzeuges angeordneten Arbeitseinheiten gemäß Anspruch 1.

### Technisches Gebiet

Das technische Gebiet sind Häckselmaschinen, Mähmaschinen und ähnliche, die verwendet werden um Gras zu schneiden und den Boden zu bearbeiten. In diesem Umfang ist eine höchst mögliche Seitenerstreckung erforderlich, um die größtmögliche Breite an Boden in einem einzigen Arbeitsgang zu bearbeiten. Deshalb werden seitliche Ausdehnungen verlangt. Das Problem das sich stellt liegt darin, dass wo die Maschine oder ein Teil des zu bearbeitenden Bereiches längs Straßen fährt und daher die von der Straßenverordnung vorgesehene Breite und die betreffenden Vorschriften einhalten muss.

### Stand der Technik

Aus DE 43 22 263 ist ein Verfahren zur Vorbereitung eines Arbeitsfahrzeuges mit Arbeitsorganen, bevorzugter Weise eine Häckselmaschine mit Häckselorganen bekannt, wobei mindestens ein Arbeitsorgan in der Arbeitsstellung zur Fahrtrichtung des Arbeitsfahrzeuges im Wesentlichen quer liegt und die Breite des Arbeitsfahrzeuges überschreitet und wobei von einer Fahrstellung, d.h. von einer Ruhestellung, in der die Maschine nicht arbeitet, in einer Stellung ausgerichtet wird, die im Wesentlichen gegenüber der Fortbewegungsrichtung hinten liegt. Dies verbreitert die Länge der Maschine mit Problemen bezüglich der Manövrierfähigkeit.

US 3 650 096 beschreibt eine mehrteilige Häckselmaschine, die von einem Traktor gezogen wird und bei der die einzelnen Teile der Häckselmaschine durch eine Zapfwelle des Traktors über eine Antriebswelle versorgt werden. Die Seitenteile der Häckselmaschine sind vertikal derart zusammenklappbar, dass sie an den Vorschriften und der Breite der Straßenspur angepasst werden. Das dort beschriebene Problem der Häckselmaschine liegt darin, dass sie sich schwer an die Bodenfläche anpasst. Überdies erlaubt die beschriebene Gestaltung keine maximale Ausdehnung für die Anpassung an die Vorschriften auch bezüglich der Höhe zusammengeklappten Zustand der mehrteiligen Häckselmaschine.

Das Dokument NL 7 604 451 beschreibt eine Häckselmaschine. In dieser Veröffentlichung ist ein Bolzen bekannt der gezogen wird zum Abkuppeln der Maschinen. Wie aus der NL 7 604 451 bekannt wird die Mähmaschine von der Dreipunkthebevorrichtung abgesenkt, bis die beiden Winkelschienen auf dem Boden liegen. Dann wird durch Ziehen der Steckbolzen 30 abgekuppelt.

Aus NL 7 604 451 ist eine Bolzenverbindung und keine Kardankupplung bekannt. NL 7 604 451 lehrt eine Abkuppeln der beiden Mähvorrichtungen durch ziehen der Bolzen.

### Kurze Beschreibung der Erfindung

In der vorliegenden Erfindung werden "im wesentlichen" Änderungen von +-5% und/oder +-5° verstanden.

Die Aufgabe der vorliegenden Erfindung ist die Ausführung einer Häckselmaschine mit mindestens zwei Arbeitseinheiten, die in einer mindestens teilweise seitlichen Stellung zum die Häckselmaschinen tragenden und/oder ziehenden Fahrzeug oder außerhalb dessen Platzbedarfes angeordnet sind, die einen Werkzeugträgerrotor mit einer zum Boden im wesentlichen paralleler Drehachse aufweisen. Die erfindungsgemäße Maschine weist überdies eine Getriebekasten auf, der mittig auf der Mittelinie der Maschine angeordnet ist, der durch die Antriebswelle des tragenden oder ziehenden Fahrzeugs angetrieben wird. Überdies weist jede im Wesentlichen seitlich angeordnete Einheit mindestens eine Verbindung mittels eines Tragarmes und eines Zugstange auf und die mittels einer Antriebswelle durch die mittige Einheit der Maschine angetrieben wird, wobei der Tragarm, der Zugstange und eine Kupplung der Antriebswelle um ca. 90° zusammenklappbar sind und alle drei die Drehmitte im wesentlichen längs einer einzigen Drehachse aufweisen. Diese Gestaltung erlaubt ein verbessertes Zusammenklappen während der Fahrt, wobei die maximale Erstreckung während der Arbeit und das beste Zusammenklappen während der Fahrt sichergestellt wird. Insbesondere sind die Verbindungen zwischen der mittigen Einheit und dem seitlichen Teil durch zwei steuerbare Elemente, die für das tragen der Mäh-/Schleiereinheit verlängerbar sind, und eine den Werkzeugträgerrotor antreibende Antriebswelle gebildet.

Die erfindungsgemäße Maschine weist einen mittigen Getriebekasten auf, der durch die Antriebswelle des die Maschine ziehenden und/oder tragenden Fahrzeugs angetrieben wird. Dafür kann er eine Eingangswelle sowohl Stirnseite als auch auf der Rückseite aufweisen. Dadurch kann die Maschine einfach angepasst werden falls eine dritte Häckseleinheit erforderlich ist, um durch die Verstellung der dritten Häckseleinheit entweder nur stirnseitig oder auf der Rückseite der Maschine getragen oder gezogen zu werden und der Eingang, d.h. die Zapfwelle für die Antriebswelle für die dritte Häckseleinheit gewechselt wird. Die erfindungsgemäße Maschine weist mindestens zwei Kardanwellen auf, die seitlich mit dem Getriebekasten verbunden sind und jeweils seitlich einen Riementrieb antreiben. Die Kardanwellen weisen jeweils zwei Kreuzgelenke/Kardangelenke auf, von denen eines auf der Drehachse im Wesentlichen zusammen mit dem jeweiligen Tragarm und der entsprechenden Zugstange für jede seitliche Häckseleinheit angeordnet ist.

Die in der mindestens teilweise gegenüber der Maschine seitlich angeordneten Arbeitsstellung Häckseleinheiten sind mit der mittigen Einheit durch einen ersten Hubarm und einer Zugstrebe verbunden und werden durch die Kardanwelle angetrieben, die einen Riementrieb antreibt und dieser treibt den Schneidrotor im wesentlichen parallel zum zu bearbeitenden Boden an. Ein Gelenk der Kardanwelle, der Hubarm und der Zugstrebe weisen eine im Wesentlichen gemeinsame Drehachse auf. Dadurch kann die seitliche Einheit zusammengeklappt werden, indem sie mittels eines Kolbens angehoben wird. Während des Anhebens erlaubt die gemeinsame Drehachse einer Kupplung der Kardanwelle, Tragarmes und Zugstange die seitliche Häckseleinheit von einer ersten im Wesentlichen horizontalen Stellung in eine zweite in wesentlichen vertikale Ruhestellung zu bringen. Der Riementrieb ist auf der Außenseite angebracht und wird daher zusammen mit der Häckseleinheit zusammengeklappt. Zwischen der gemeinsamen Drehachse, um welche herum die Kupplung der Kardanwelle geschwenkt/zusammengeklappt wird, und dem Getriebekasten ist mindestens eine zweite Gelenkskreuzkupplung auf der Kardanwelle anwesend, in dem somit die Anpassung ermöglicht wird und erlaubt wird, die im Wesentlichen zwischen dem Tragarm, den Zugstange und der ersten Kupplung der Kardanwelle gemeinsame Drehachse für jede seitliche Häckseleinheit aufrechtzuerhalten. Weitere Merkmale und Einzelheiten der Erfindung gehen aus den Patentansprüchen und aus der folgenden Beschreibung einer bevorzugten, nicht begrenzenden und in den beigelegten Zeichnungen dargestellten Ausführungsform hervor. Es zeigen:

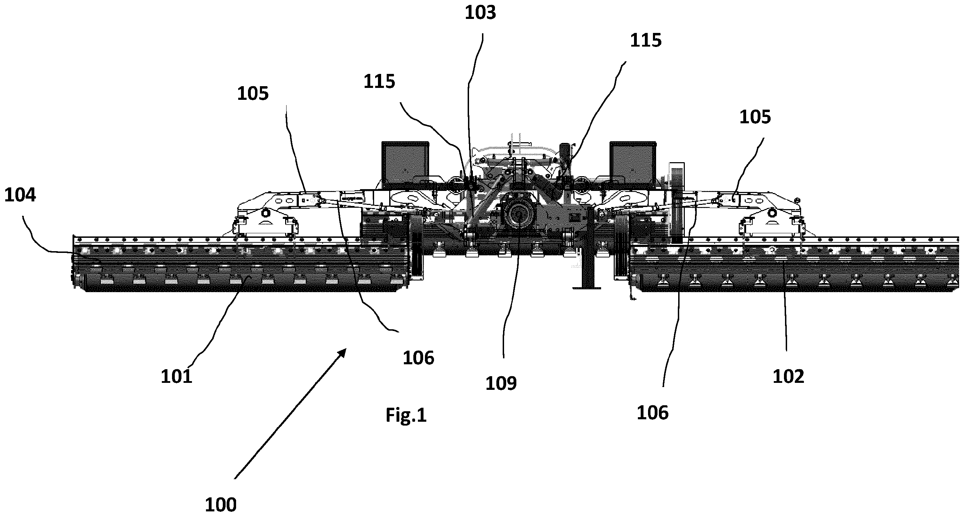

- Figur 1: eine Stirnansicht einer erfindungsgemäßen Maschine in Arbeitsstellung,

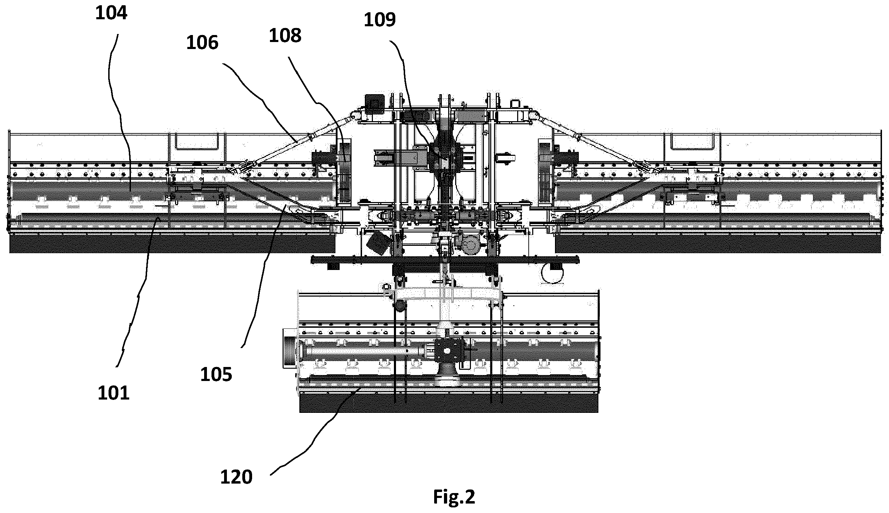

- Figur 2: eine Draufsicht auf eine erfindungsgemäße Maschine in Arbeitsstellung,

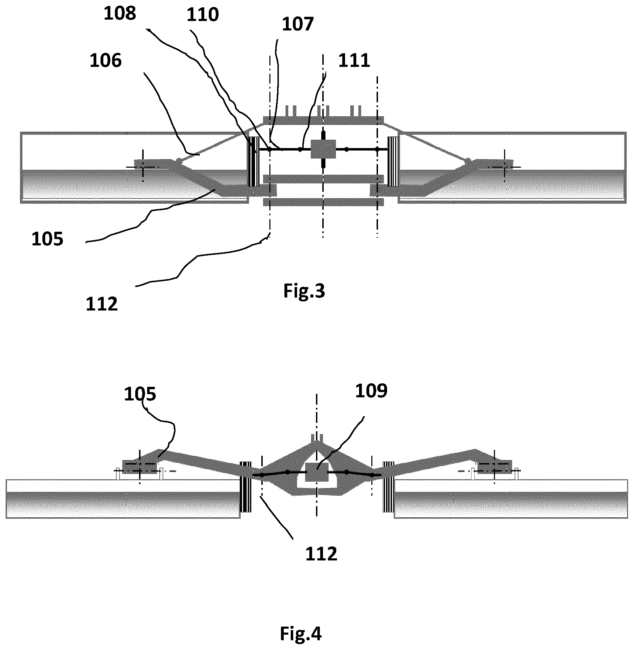

- Figur 3: eine Draufsicht auf eine schematische erfindungsgemäße Maschine in Arbeitsstellung,

- Figur 4: eine hintere Ansicht einer schematischen erfindungsgemäßen Maschine in Arbeitsstellung, und

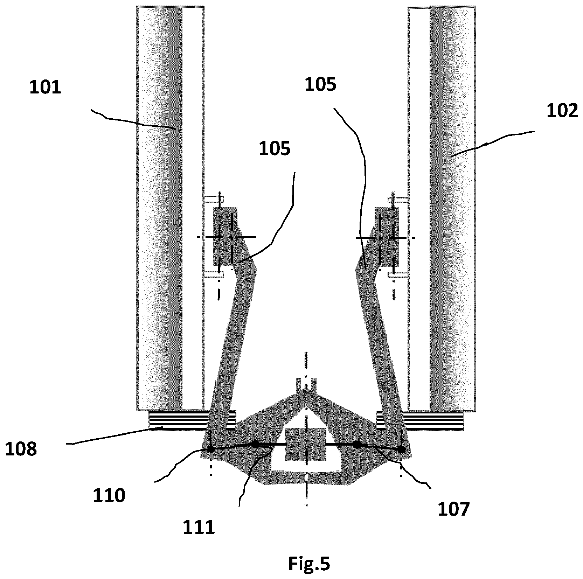

- Figur 5: eine hintere Ansicht einer schematischen erfindungsgemäßen Maschine in Transportstellung.

Mit der Bezugsziffer 100 wird eine Häckselmaschine, Mähmaschinen angegeben, die durch ein Fahrzeug gezogen und/oder getragen wird und mindestens zwei seitliche Häckseleinheiten 101 und 102 umfasst. Vorteilhafter Weise ist das Fahrzeug ein Traktor oder ähnliches. Die beiden Häckseleinheiten 101 und 102 sind in Arbeitsstellung mindestens teilweise seitlich des tragenden und/oder ziehenden nicht gezeigten Fahrzeugs außerhalb dessen Platzbedarfes in Fahrtrichtung der Häckselmaschinen angeordnet, die jeweils einen Werkzeugträgerrotor 104 in einer Arbeitsstellung mit zum Boden im Wesentlichen parallelen Drehachse aufweisen. Die beiden Häckseleinheiten 101 und 102 sind mit einer mittigen Einheit 103 mittels eines Tragarmes 105 und einer Zugstange 106 verbunden. Der Tragarm 105 ist mit der Häckseleinheit 101, 102 verstellbar verbunden, womit die seitliche Verstellung der Häckseleinheiten 101, 102 erlaubt wird. Auf diese Art und Weise kann die Schneidebreite bis einer vorbestimmten Höchstverlängerung angepasst werden.

Das Anheben der Häckseleinheiten 101, 102 kann durch den Kolben 115 gesteuert werden, die bevorzugter Weise aus einem aus- und einziehbaren Kolben einer Zylinderkolbeneinheit gebildet ist. Die Häckseleinheit 101 wird durch eine Antriebswelle 107 angetrieben, die einen zwischen dem Werkzeugträgerrotor 104 und der Antriebswelle 107 geschalteten Riementrieb 108 antreibt. Die Antriebswelle 107 ist mit dem Getriebekasten 109 verbunden. Zwischen der Zapfwelle des Getriebekastens 109 und dem Riementrieb 108, weist die Antriebswelle mindestens zwei Kardankupplungen 110 und 111 auf. Mindestens eine Kardankupplung 110 ist auf einer Drehachse 112 angeordnet, die im Wesentlichen auch für den Tragarm 105 und den Zugstange 106 dieselbe ist. Dadurch kann die gesamte seitliche Einheit 101 um eine einzige Drehachse 112 geschwenkt werden.

Durch diese Schwenkung wird die äußere Häckseleinheit 101, 102 in eine gegenüber der mittigen Einheit im Wesentlichen um 90° gedrehte, d.h. senkrechte Stellung gebracht.

Beim Zusammenklappen wird auch der Riementrieb 108 jeweils zusammen mit der seitlichen Einheit 101, 102 gegenüber der mittigen Einheit zusammengeklappt.

Die zweite Kardankupplung 111 befindet sich zwischen der ersten Kardankupplung 110 und dem Getriebekasten 109.

Durch die zweite Kardankupplung 111 ist möglich, die Antriebswelle 107 den Änderungen des Bodens anzupassen, indem die Drehachse für den Tragarm 105, die Antriebswellen 107 und den Zugstange in Stellung beibehalten wird.

Die seitlichen Einheiten 101, 102 sind mit dem jeweiligen Tragarm 105 bevorzugter Weise drehbar so verbunden, dass die Häckselmaschinen der Neigung des Bodens angepasst werden können.

Vorteilhafter Weise können für jeden Tragarm 105 und jede Einheit 101, 102 Steuerkolben vorgesehen sein, welche die jeweilige Häckseleinheit 101, 102 ausrichten.

Der Getriebekasten 109 kann der Art ausgebildet sein, dass der Eingang und der Ausgang der den Getriebekasten 109 seitens zum Beispiel des Traktors antreibenden Antriebswelle von vorne nach hinten gebracht werden, um die Maschine 100 von einer gezogenen in eine geschobenen Maschine d.h. vor dem Fahrzeug/Traktor gelegen umzuwandeln werden kann.

Daher kann auch die Stellung der dritten Häckseleinheit 120 gegenüber der Maschine 100 von einer hinteren auf eine vordere gewechselt werden.

In einer bevorzugten Ausführungsform ist die Verbindung Tragarm 105-seitliche Häckseleinheit 101, 102 schwingend ausgebildet. Um einen leichteren Zugang zu gewährleisten, können die Riementriebe 108 jeweils seitlich zugänglich sein.

Der Kolben 115 kann ein Hydraulikkolben sein der durch eine steuerbare Zylinderkolbeneinheit gebildet ist.

Es ist schließlich klar, dass an der bis jetzt beschriebenen Häckselmaschine Zusätze, Änderungen oder Varianten vorgenommen werden können, die für den Fachmann nahe liegend sind ohne den durch die beiliegenden Patentansprüche gelieferten Schutzbereich zu verlassen.

### Aufstellung der Bezugsziffern

- 100: Maschine
- 101: Häckseleinheit
- 102: Häckseleinheit
- 103: mittige Einheit
- 104: Werkzeugträgerrotor
- 105: Tragarm
- 106: Zugstange
- 107: Antriebswelle
- 108: Riementrieb
- 109: Getriebekasten
- 110: Kardankupplung/Kardangelenk
- 111: Kardankupplung/Kardangelenk
- 112: Drehachse
- 115: Kolben
- 120: Dritte Einheit

## Patentansprüche

1. Häckselmaschine (100), umfassend eine mittige Einheit (103) mit mindestens zwei Häckseleinheiten (101, 102), die in Arbeitsstellung mindestens teilweise seitlich gegenüber einem die Häckselmaschine (100) tragenden und/oder ziehenden Fahrzeug angeordnet sind, wobei jede Häckseleinheit (101, 102) einen Werkzeugträgerrotor (104) mit einer im Wesentlichen zum zu bearbeitenden Boden parallelen Achse und die mittige Einheit (103) eine Getriebekasten (109) aufweist, der im Wesentlichen auf der Mittellinie der mittigen Einheit (103) angeordnet ist, die durch eine Antriebswelle des tragenden und/oder ziehenden Fahrzeug antreibbar ist, wobei jede seitliche Häckseleinheit (101, 102) mit einer mittigen Einheit (103) der Maschine mittels eines Tragarmes (105) und einer Zugstange (106) verbunden ist und der Werkzeugträgerrotor (104) mittels einer Antriebswelle (107) angetrieben ist, **dadurch gekennzeichnet, dass** die Antriebswelle (107) eine erste Kardankupplung (110) aufweist und dass für jede seitliche Häckseleinheit (101, 102) der Tragarm (105) und die Zugstange eine einzige Drehachse (112) aufweisen und die erste Kardankupplung (110) auf der einzigen Drehachse (112) angeordnet ist und dass die Antriebswelle zwischen der einzigen Drehachse (112) und dem Getriebe mindestens eine zweite Kardankupplung (111) aufweist.

2. Häckselmaschine (100) nach Anspruch 1, **dadurch gekennzeichnet, dass** das Anheben/Absenken der seitlichen Häckseleinheiten (101, 102) mittels eines Kolbens (115) durchgeführt wird, der durch eine steuerbare Zylinderkolbeneinheit gebildet ist.

3. Häckseleinheit (100) nach einem der vorstehenden Ansprüche, **dadurch gekennzeichnet, dass** die Zapfwelle für die Antriebswelle für eine dritte Häckseleinheit (120) von einer gegenüber der mittigen Einheit (103) hinteren Stellung in eine gegenüber der mittigen Einheit (103) vorderen Stellung gebracht werden kann.

4. Häckseleinheit (100) nach einem der vorstehenden Ansprüche, **dadurch gekennzeichnet, dass** die Verbindung Tragarm (105)-Häckseleinheit schwingend ausgebildet ist.

5. Häckseleinheit (100) nach einem der vorstehenden Ansprüche, **dadurch gekennzeichnet, dass** zwischen Antriebswelle (107) und Werkzeugträgerrotor (104) ein Riementrieb (108) angeordnet ist und seitlich zugänglich ist.

## Claims

1. Chaff cutter (100), comprising a central unit (103) with at least two chaff cutting units (101, 102) arranged, in working position, at least partially laterally opposite a vehicle supporting and/or towing the chaff cutter (100), wherein each chaff cutting unit (101, 102) has a tool carrier rotor (104) with an axis substantially parallel to the ground to be worked and the central unit (103) has a gear box (109) arranged substantially on the centre line of the central unit (103), which is drivable by a drive shaft of the supporting and/or towing vehicle, wherein each side chaff cutting unit (101, 102) is connected to a central unit (103) of the machine by means of a support arm (105) and a drawbar (106), and the tool carrier rotor (104) is driven by means of a drive shaft (107), **characterized in that** the drive shaft (107) has a first cardan coupling (110), and **in that**, for each side chaff cutting unit (101, 102), the support arm (105) and the drawbar have a single axis of rotation (112), and the first cardan coupling (110) is arranged on the single axis of rotation (112), and **in that**, between the single axis of rotation (112) and the gear, the drive shaft has at least one second cardan coupling (111).

2. Chaff cutter (100) according to Claim 1, **characterized in that** the raising/lowering of the side chaff cutting units (101, 102) is performed by means of a piston (115) constituted by a controllable cylinder-piston unit.

3. Chaff cutting unit (100) according to any of the preceding claims, **characterized in that** the power take-off shaft for the drive shaft for a third chaff cutting unit (120) can be moved from a rear position with respect to the central unit (103) to a front position with respect to the central unit (103).

4. Chaff cutting unit (100) according to any of the preceding claims, **characterized in that** the connection between support arm (105) and chaff cutting unit is designed to be oscillating.

5. Chaff cutting unit (100) according to any of the preceding claims, **characterized in that** a belt drive (108) is arranged between drive shaft (107) and tool carrier rotor (104) and is accessible from the side.

## Revendications

1. Hacheuse (100) comprenant une unité centrale (103) avec au moins deux unités de hachage (101, 102) disposées en position de travail au moins en partie latéralement par rapport à un véhicule portant et/ou tirant la hacheuse (100), chaque unité de hachage (101, 102) comprenant un rotor porte-outil (104) avec un axe sensiblement parallèle au sol à traiter et l'unité centrale (103) comprenant un carter d'engrenage (109) disposé sensiblement sur l'axe central de l'unité centrale (103), qui est entraînable par un arbre d'entraînement du véhicule portant et/ou tirant, dans laquelle chaque unité de hachage latérale (101, 102) est relié à une unité centrale (103) de la machine au moyen d'un bras de support (105) et d'une barre de traction (106) et le rotor porte-outil (104) est entraîné au moyen d'un arbre d'entraînement (107), **caractérisée en ce que** l'arbre d'entraînement (107) présente un premier accouplement à cardan (110) et **en ce que** pour chaque unité de hachage latérale (101, 102), le bras de support (105) et la barre de traction présentent un seul axe de rotation (112) et le premier accouplement à cardan (110) est disposé sur l'axe de rotation unique (112) et **en ce que** l'arbre d'entraînement entre l'axe de rotation unique (112) et la transmission comporte au moins un deuxième accouplement à cardan (111).

2. Hacheuse (100) selon la revendication 1, **caractérisée en ce que** le soulèvement/abaissement des unités de hachage latérales (101, 102) est effectué au moyen d'un piston (115) formé par une unité de piston de cylindre contrôlable.

3. Unité de hachage (100) selon l'une quelconque des revendications précédentes, **caractérisée en ce que** la prise de force pour l'arbre d'entraînement pour une troisième unité de hachage (120) peut être amenée d'une position arrière par rapport à l'unité centrale (103) à une position avant par rapport à l'unité centrale (103).

4. Unité de hachage (100) selon l'une quelconque des revendications précédentes, **caractérisée en ce que** la liaison entre l'unité de hachage à bras porteur (105) est conçue de manière oscillante.

5. Unité de hachage (100) selon l'une des revendications précédentes, **caractérisée en ce qu'**un entraînement à courroie (108) est disposé entre l'arbre d'entraînement (107) et le rotor porte-outil (104) et est accessible latéralement.
